# EUROPEAN PATENT APPLICATION

(11) **EP 3 173 756 A1**
(43) Date of publication of application: **31.05.2017**
(21) Application number: 15196955.7
(22) Date of filing: 30.11.2015
(51) Int. Cl.: G01K 1/08, G01K 1/16, G01K 13/02

(54) **TEMPERATURE SENSOR AND METHOD FOR THE MANUFACTURE OF SAID SENSOR**

(71) Applicant: ENDRESS + HAUSER WETZER GmbH + Co. KG, 87484 Nesselwang (DE)
(72) Inventor: ERALTI, Davide, 20900 Monza (IT)
(74) Representative: Andres, Angelika Maria

(57) **Abstract**

The invention concerns a Temperature sensor (1) for measuring the temperature of a medium consisting at least of
- a thermowell (2) which has an inner surface (2a), an outer surface (2b), an internal diameter (2c) and an outer diameter (2d);
- a cylindrical sealing cap (3), an outer diameter (3a) that is essentially the same as the outer diameter (2d) of the thermowell (2), an open end section and an interior area (3b), wherein the interior area (3b) has an internal diameter (3c), an inner wall area (3d) and an inner floor area (3e), and wherein the sealing cap (3) is fitted on an end section (2e) of the thermowell (2) in such a way that the sealing cap (3) seals the end section (2e) of the thermowell (2);
- a sleeve (4), which can be deformed in the radial direction; and
- a rod-shaped temperature-sensitive component (5), which has an end section (5a) on which the sleeve (4) is fitted, and which is guided in the axial direction (a) into the thermowell (2) in the direction of the inner floor area (3e) of the sealing cap (3), as a result of which the sleeve (4) undergoes radial deformation in such a way that causes a thermo-conductive connection of the sleeve (4) with the inner wall area (3d) of the sealing cap (3) and with the temperature-sensitive component (5).

## Description

The invention concerns a temperature sensor for measuring the temperature of a medium and a method for the manufacture of said sensor.

Temperature sensors have many applications in the field of automation engineering, such as to measure the temperature of a medium in a pipe and/or in a vessel, or in field devices, such as thermal flowmeters for measuring the flow velocity and/or density of a medium in a pipe. Corresponding temperature sensors and field devices are manufactured and sold by the patent applicant. The underlying measuring principles of the temperature sensors and field devices are known from multiple publications.

Temperature sensors comprise a temperature-sensitive component, which is often arranged inside a thermowell. The thermowell then functions like a housing that protects the temperature-sensitive component, for example, against aggressive media and/or forces caused by the flow of the medium. Another advantage of a thermowell is that it is possible to hot-swap the temperature-sensitive component during operation.

To guarantee the functionality of the temperature sensor, there must be as good a thermal contact as possible between the temperature-sensitive component and the thermowell. However, in common temperature sensors there is often a layer of air between the inner wall of the thermowell and the temperature-sensitive component, which can result in a low heat transfer rate and therefore in slow temperature sensor s response time.

The problem thereby addressed by the invention is to present a temperature sensor and a method for the manufacture of said sensor that makes it possible to improve the transfer of heat from a medium to a temperature-sensitive component implemented in a temperature sensor.

The problem is solved by a temperature sensor for determining and/or monitoring the temperature of a medium, which at least consists of
- a thermowell which has an inner surface, an outer surface, an internal diameter and an outer diameter;
- a cylindrical sealing cap, which has an outer surface with an outer diameter that is essentially the same as the outer diameter of the thermowell, an open end section and an interior area, wherein the interior area has an internal diameter, an inner wall area and an inner floor area, and wherein the sealing cap is fitted on an end section of the thermowell in such a way that the sealing cap seals the end section of the thermowell;
- a sleeve, which can be deformed in the radial direction; and
- a rod-shaped temperature-sensitive component, which has an end section on which the sleeve is fitted, and which is guided in the axial direction into the thermowell in the direction of the inner floor area of the sealing cap, as a result of which the sleeve undergoes radial deformation in such a way that causes a thermo-conductive connection of the sleeve with the inner wall area of the sealing cap and with the temperature-sensitive component.

The advantage of the temperature sensor according to the invention is that the temperature-sensitive component and the thermowell are in direct contact via the sleeve. This produces a thermo-conductive connection which remedies the disadvantage of a lower heat transfer rate of conventional temperature sensors.

Another advantage is that it is possible to remove and/or replace the temperature-sensitive component at any time despite the fixed, thermo-conductive connection of the temperature-sensitive component with the protection cap via the sleeve.

The temperature sensor according to the invention can be used in a wide range of applications. For example, the temperature sensor is used in a thermal flowmeter or in another application mentioned in the introduction to the description.

According to an advantageous development of the temperature sensor according to the invention, the internal diameter of the interior area of the sealing cap is greater than the internal diameter of the thermowell such that a ledge-like transition is formed between the inner wall area of the sealing cap and the inner surface of the thermowell. If the case arises in which, when the temperature-sensitive component is removed, the sleeve is deformed in such a way that it is not immediately released from the temperature-sensitive component, the ledge-like transition makes it impossible to remove the sleeve with the temperature-sensitive component from the thermowell because this ledge-like transition stops any axial movement of the sleeve from the protection cap into the thermowell. This makes it easy to replace the temperature-sensitive component.

In a first version of the temperature sensor according to the invention, the interior area of the sealing cap has a cylindrical design and has a cylindrical section with an internal diameter, which is smaller than the internal diameter of the interior area, and wherein the cylindrical section is arranged towards the inner floor area of the sealing cap.

According to a preferred embodiment of the temperature sensor according to the invention, the sleeve comprises:
- a cylindrical base disk with an outer diameter that corresponds to the internal diameter of the cylindrical section of the sealing cap; and
- a wall with a circular cross-section and an open end section, which is sealed at its other end section by the base disk and which is widened conically in the direction of the open end section, wherein the wall has a large number of incisions in the axial direction which extend from the open end section to the base disk and are arranged at an equal distance from one another.

According to an alternative preferred embodiment of the temperature sensor according to the invention, the sleeve comprises:
- a wall with a circular cross-section, with a first open end section and a second open end section, wherein the wall is tapered conically in the direction of the second open end section; and
- an annular element, which has an internal diameter and an outer diameter that is larger than the diameter of the cylindrical section of the sealing cap, wherein the wall is fitted on the annular element at the height of the internal diameter of the annular element, and wherein the wall has a large number of incisions in the axial direction which extend from the open end section to the annular element and are arranged at an equal distance from one another.

In both embodiments presented, the sleeve can be radially deformed in a reversible manner. As a result, there is no need to replace the sleeve when replacing the temperature-sensitive component. Furthermore, the sleeve is designed in such a way that it is compatible with a wide array of temperature-sensitive components, particularly temperature-sensitive components of different thicknesses.

In a second version of the temperature sensor according to the invention, the interior area of the sealing cap has a conical design and tapers in the direction of the inner floor area of the sealing cap.

According to a preferred embodiment of the temperature sensor according to the invention, the sleeve comprises:
- a cylindrical interior area; and
- a wall with a circular cross-section, with an open end section and with a closed end section, which is widened conically in the direction of the open end section, wherein the sleeve has a radial incision along its longitudinal axis.

In accordance with an advantageous development of the temperature sensor according to the invention, a spring element is fitted on the inner floor area of the sealing cap. When the temperature-sensitive component is removed, the spring element supports the axial movement by an axial force, making it easier to replace the temperature-sensitive component. The temperature sensor according to the invention can be adapted to temperature-sensitive components of different lengths by selecting the size of the spring element specifically for the length of the individual temperature-sensitive component.

According to a preferred embodiment of the temperature sensor according to the invention, the spring element is made from a metal, particularly stainless steel or a metal alloy.

According to a preferred embodiment of the temperature sensor according to the invention, the sleeve, the thermowell and the sealing cap are each made from a thermo-conductive material. The sleeve, the thermowell and the sealing cap can be made from the same material.

According to a preferred embodiment of the temperature sensor according to the invention, the sleeve is made from a metal, particularly stainless steel or a metal alloy, a thermo-conductive plastic or a thermo-conductive composite material. Ideally the thermo-conductivity of the sleeve is the same as or higher than that of the thermowell and/or the protection cap.

According to a preferred embodiment of the temperature sensor according to the invention, the thermowell and the sealing cap are each made from a metal, particularly stainless steel. The material must be able to withstand aggressive media and have high thermal conductivity.

Furthermore, the problem addressed by the invention is solved by a method to manufacture a temperature sensor according to the invention, with a thermowell, which has an inner surface, an outer surface, an internal diameter and an outer diameter, with a cylindrical sealing cap which has an outer surface with an outer diameter that corresponds to the outer diameter of the thermowell, an open end section and an interior area, wherein the interior area has an internal diameter, an inner wall area and an inner floor area, with a sleeve that can be deformed in the radial direction, and with a rod-shaped temperature-sensitive component, said method comprising at least the following steps:
- Insertion of the sleeve, which can be deformed in the radial direction, into the sealing cap;
- Sealing of an end section of the thermowell by attaching the open end section of the sealing cap to the end section of the thermowell in such a way that the sealing cap seals the end section of the thermowell;
- Introduction of the temperature-sensitive component in the axial direction through the thermowell in the direction of the inner floor area of the sealing cap, as a result of which the sleeve undergoes radial deformation in such a way that causes a thermo-conductive connection of the sleeve with the inner wall area of the sealing cap and with the temperature-sensitive component.

The major advantage of the method according to the invention is that, apart from the introduction of the temperature-sensitive component into the thermowell, no other manual intervention is needed to establish a thermo-conductive connection of the temperature-sensitive component with the protection cap.

According to a preferred embodiment of the method according to the invention, the sealing cap is attached on the thermowell using a welding procedure, particularly hard soldering, lasering or Wolfram inert gas welding.

The invention is explained in more detail on the basis of the following Figures 1 to 6.
Fig. 1 shows a first embodiment of the temperature sensor according to the invention;
Fig. 2 shows the sleeve of the first embodiment of the temperature sensor according to the invention;
Fig. 3 shows a second embodiment of the temperature sensor according to the invention;
Fig. 4 shows the sleeve of the second embodiment of the temperature sensor according to the invention;
Fig. 5 shows a third embodiment of the temperature sensor according to the invention; and
Fig. 6 shows the sleeve of the third embodiment of the temperature sensor according to the invention.

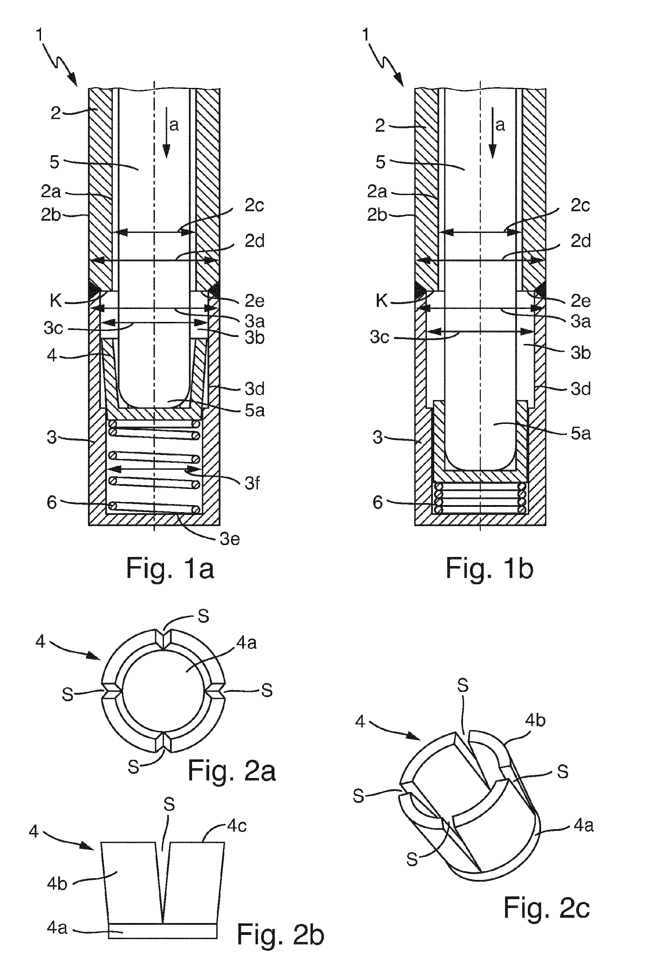

Fig. 1 shows a first embodiment of the temperature sensor 1 according to the invention. The temperature sensor 1 comprises a thermowell 2. This thermowell 2 has a tubular design and is made from a thermo-conductive material, particularly a metallic material. A cylindrical sealing cap 3 is fitted on an end section of the thermowell 2 in such a way that the end section of the thermowell 2 is sealed by the sealing cap 3. This is done using a welding procedure, particularly hard soldering, lasering or Wolfram inert gas welding. Ideally the sealing cap 3 is made from the same material as the thermowell 2.

The other end section of the thermowell 2, a threaded fitting fixes the thermowell 2 on a connection head.

A sleeve 4 is inserted into the protection cap 3 before the sealing cap 3 is fitted on the end section of the thermowell 2. Once the protection cap 3 has been fitted on the thermowell 2, a rod-shaped temperature-sensitive component 5 is inserted into the thermowell 2 in the axial direction a. This component can, for example, be a resistance temperature detector or a thermocouple.

The sealing cap 3 is designed in such a way that it has a cylindrical interior area 3b which contains a further cylindrical section with a small internal diameter 3f.

The sleeve 4, illustrated in Fig. 2, is designed in such a way that it has a base disk 4a the diameter of which corresponds to the internal diameter 3f of the cylindrical section of the sealing cap 3. Furthermore, the sleeve 4 has a wall 4b which is widened conically in the direction of the open end section 4c of the sleeve 4 and has axial incisions S. The sleeve 4 is made from a material whose thermo-conductivity is the same as or higher than that of the material of the thermowell 2 and/or the protection cap 3.

When the temperature-sensitive component 5 is introduced into the thermowell 2, the end section 5a of the temperature-sensitive component 5 is guided into the sleeve 4. In the process, the sleeve 4 with the temperature-sensitive component 5 is pushed into the cylindrical section of the sealing cap 3 and undergoes an elastic deformation in the radial direction caused by the different geometry of the sleeve 4 in relation to the cylindrical section. This causes a thermo-conductive connection of the sleeve 4 with the inner wall area 3d of the sealing cap 3 and with the temperature-sensitive component 5.

This rectifies the disadvantage of conventional temperature sensors 1, which often have a layer of air between the thermowell 2 and the temperature-sensitive component 5, resulting in a slow heat transfer rate.

Finally the temperature-sensitive component 5 is additionally fixed in such a way that it is screwed into a connection head that is itself connected to the thermowell.

It is possible to replace the temperature-sensitive component 5 at any time. A spring element 6, which is arranged in the sealing cap 3, creates an axial force which makes it easier to remove the temperature-sensitive component 5. As soon as the sleeve 4 leaves the cylindrical section of the sealing cap 3, it takes on its original shape and releases itself from the temperature-sensitive component 5.

If the radial deformation of the sleeve 4 is plastic in nature, the sleeve might not automatically release itself from the temperature-sensitive component 5 under certain circumstances. Therefore the interior area 3b of the sealing cap 3 is designed in such a way that this interior are has a bigger internal diameter 3c than the internal diameter 2c of the thermowell. This causes a ledge-like transition k between the sealing cap 3 and the thermowell 2, which releases the sleeve 4 from the temperature-sensitive component 5 when the temperature-sensitive component 5 is removed.

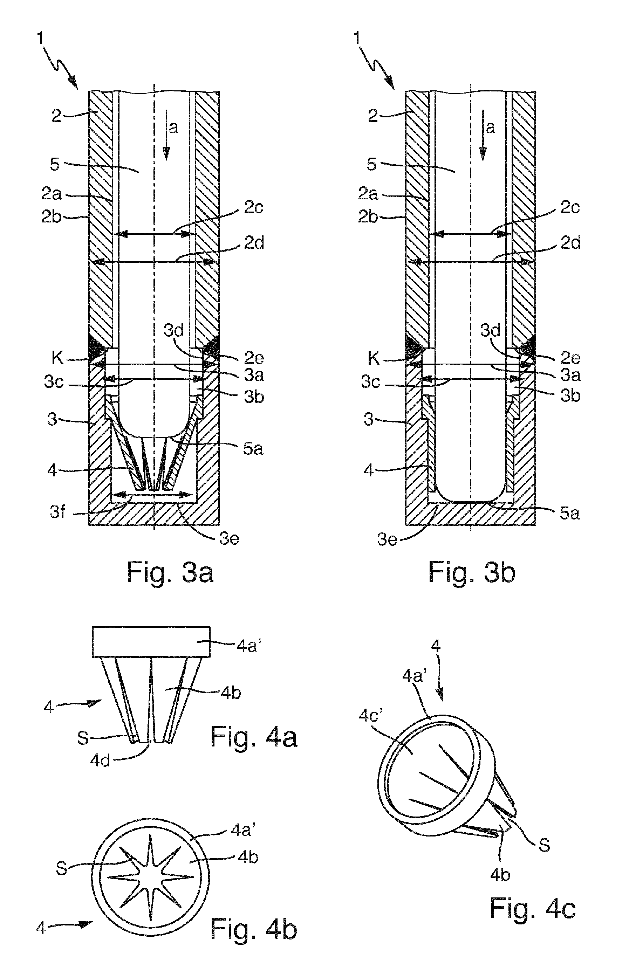

Fig. 3 shows a second embodiment of the temperature sensor 1 according to the invention. The design of the thermowell 2 and the sealing cap 3 is identical to the first embodiment shown in Fig.1. However, the sleeve 4 is different, as shown in Fig. 4. A spring element 6 is not provided in this embodiment.

The sleeve 4 is designed in such a way that it has an annular element 4a which has an internal diameter and an outer diameter, which is larger than the diameter 3f of the cylindrical section of the sealing cap 3. A wall 4b with a circular cross-section is fitted on the annular element 4a , said wall having a first open end section 4c and a second open end section 4d. The wall 4b tapers in the direction of the second open end section 4d and comprises a number of incisions S in the axial direction, which extend from the second open end section 4d to the annular element 4a and are an equal distance apart from one another.

The sleeve 4 is placed in the sealing cap 3 in such a way that the second open end section 4d of the sleeve is arranged in the direction of the inner floor area 3e of the sealing cap. The annular element 4a rests on the transition to the cylindrical section.

When the temperature-sensitive component 5 is introduced into the thermowell 2, the end section 5a of the temperature-sensitive component 5 is guided into the sleeve 4. During this, the wall 4b of the sleeve is widened elastically by the end section 5a of the temperature sensor in such a way that the wall 4b is in contact with the inner wall area 4d of the sealing cap. This causes a thermo-conductive connection of the sleeve 4 with the inner wall area 3d of the sealing cap 3 and with the temperature-sensitive component 5.

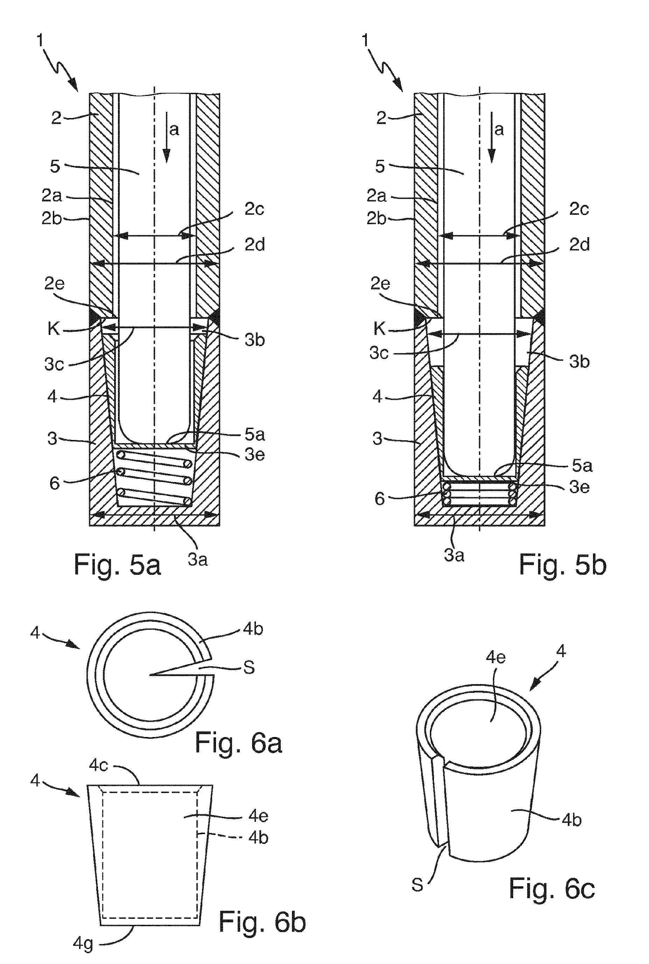

Fig. 5 shows a third embodiment of the temperature sensor 1 according to the invention. In this version, the sealing cap 3 is designed in such a way that it has an interior area 3b that tapers towards the inner floor area 3e of the sealing cap 3.

The associated sleeve 4, as illustrated in Fig. 6, consists of a cylindrical interior area 4e and a wall 4b. The wall 4b has a circular cross-section with an open end section 4c and a closed end section 4f, wherein the wall 4b is widened conically in the direction of the open end 4c. The sleeve 4 has a radial incision S along its longitudinal axis.

The sleeve 4 is placed in the sealing cap 3 in such a way that the closed end section 4f of the sleeve is arranged in the direction of the inner floor area 3e of the sealing cap.

When the temperature-sensitive component 5 is introduced into the thermowell 2, the end section 5a of the temperature-sensitive component 5 is guided into the sleeve 4. In the process, the sleeve 4 with the temperature-sensitive component 5 is pushed into the conical interior area 3b of the sealing cap 3 and undergoes an elastic deformation in the radial direction caused by the different geometry of the sleeve 4 in relation to the conical interior area 3b of the sealing cap 3. This causes a thermo-conductive connection of the sleeve 4 with the inner wall area 3d of the sealing cap 3 and with the temperature-sensitive component 5.

In this version, a spring element 6, which is arranged in the direction of the inner floor area 3e of the sealing cap 3, also facilitates the removal of the temperature-sensitive component 5 during removal and/or replacement.

The temperature sensor 1 according to the invention can be used in a wide range of applications. For example, the temperature sensor 1 can be used in a thermal flowmeter. It is self evident that a wide range of applications are feasible other than the applications mentioned.

Similarly, the temperature sensor according to the invention is not limited to the embodiments and examples described.

### Legend for diagrams

- 1: Temperature sensor
- 2: Thermowell
- 2a: Inner surface of thermowell
- 2b: Outer surface of thermowell
- 2c: Internal diameter of thermowell
- 2d: Outer diameter of thermowell
- 2e: End section of thermowell
- 3: Cylindrical sealing cap
- 3a: Outer diameter of cylindrical sealing cap
- 3b: Interior area
- 3c: Internal diameter of cylindrical sealing cap
- 3d: Inner wall area
- 3e: Inner floor area
- 3f: Internal diameter of cylindrical section
- 4: Sleeve
- 4a: Base disk/ring element
- 4b: Wall of sleeve
- 4c, 4c: (First) open end section of sleeve
- 4d: Second open end section of sleeve
- 4e: Cylindrical interior area
- 4f: Closed end section of sleeve
- 5: Rod-shaped temperature-sensitive component
- 5a: End section of rod-shaped temperature-sensitive component
- 6: Spring element
- a: Axial direction
- k: Ledge-like transition
- S: Axial incisions

## Claims

1. Temperature sensor (1) for measuring the temperature of a medium consisting at least of
- a thermowell (2) which has an inner surface (2a), an outer surface (2b), an internal diameter (2c) and an outer diameter (2d);
- a cylindrical sealing cap (3), an outer diameter (3a) that is essentially the same as the outer diameter (2d) of the thermowell (2), an open end section and an interior area (3b), wherein the interior area (3b) has an internal diameter (3c), an inner wall area (3d) and an inner floor area (3e), and wherein the sealing cap (3) is fitted on an end section (2e) of the thermowell (2) in such a way that the sealing cap (3) seals the end section (2e) of the thermowell (2);
- a sleeve (4), which can be deformed in the radial direction; and
- a rod-shaped temperature-sensitive component (5), which has an end section (5a) on which the sleeve (4) is fitted, and which is guided in the axial direction (a) into the thermowell (2) in the direction of the inner floor area (3e) of the sealing cap (3), as a result of which the sleeve (4) undergoes a radial deformation in such a way that causes a thermo-conductive connection of the sleeve (4) with the inner wall area (3d) of the sealing cap (3) and with the temperature-sensitive component (5).

2. Temperature sensor (1) as claimed in Claim 1, wherein the internal diameter (3c) of the interior area (3b) of the sealing cap (3) is greater than the internal diameter (2c) of the thermowell (2) such that a ledge-like transition (k) is formed between the inner wall area (3d) of the sealing cap (3) and the inner surface (2a) of the thermowell (2).

3. Temperature sensor (1) as claimed in at least one of the Claims 1 or 2, wherein the interior area (3b) of the sealing cap (3) has a cylindrical design and has a cylindrical section with an internal diameter (3f) that is smaller than the internal diameter (3c) of the interior area (3b), and wherein the cylindrical section is arranged towards the inner floor area (3e) of the sealing cap (3).

4. Temperature sensor (1) as claimed in Claim 3, wherein the sleeve (4) comprises:
- a cylindrical base disk (4a) with an outer diameter that corresponds to the internal diameter (3f) of the cylindrical section of the sealing cap (3); and
- a wall (4b) with a circular cross-section and an open end section (4c), which is sealed at its other end section by the base disk (4a) and which is widened conically in the direction of the open end section (4c), wherein the wall (4b) has a large number of incisions (S) in the axial direction which extend from the open end section (4c) to the base disk (4a) and are arranged at an equal distance from one another.

5. Temperature sensor (1) as claimed in Claim 3, wherein the sleeve (4) comprises:
- a wall (4b) with a circular cross-section, with a first open end section (4c) and a second open end section (4d), wherein the wall (4b) is tapered conically in the direction of the second open end section (4d); and
- an annular element (4a), which has an internal diameter and an outer diameter that is larger than the diameter (3f) of the cylindrical section of the sealing cap (3), wherein the wall (4b) is fitted on the annular element (4a) at the height of the internal diameter of the annular element (4a), and wherein the wall (4b) has a large number of incisions (S) in the axial direction which extend from the open end section (4d) to the annular element (4a) and are arranged at an equal distance from one another.

6. Temperature sensor (1) as claimed in at least one of the Claims 1 or 2, wherein the interior area (3b) of the sealing cap (3) has a conical shape and tapers in the direction of the inner floor area (3e) of the sealing cap (3).

7. Temperature sensor (1) as claimed in Claim 6, wherein the sleeve (4) comprises:
- a cylindrical interior area (4e); and
- a wall (4b) with a circular cross-section, with an open end section (4c) and with a closed end section (4f), which is conically widened in the direction of the open end section (4c), wherein the sleeve (4) has a radial incision (S) along its longitudinal axis.

8. Temperature sensor (1) as claimed in at least one of the Claims 4, 6 or 7,
wherein a spring element (5) is fitted on the inner floor area (3e) of the sealing cap (3).

9. Temperature sensor (1) as claimed in Claim 8, wherein the spring element (5) is made from a metal, particularly stainless steel or a metal alloy.

10. Temperature sensor (1) as claimed in at least one of the previous claims,
wherein the sleeve (4), the thermowell (2) and the sealing cap (3) are each made from a thermo-conductive material.

11. Temperature sensor (1) as claimed in at least one of the previous claims,
wherein the sleeve (4) is made from a metal, particularly stainless steel or a metal alloy, a thermo-conductive plastic or a thermo-conductive composite material.

12. Temperature sensor (1) as claimed in at least one of the previous claims,
wherein the thermowell (2) and the sealing cap (3) are each made from a metal, particularly stainless steel.

13. Method to manufacture a temperature sensor (1) as claimed in at least one of the previous claims, with a thermowell (2), which has an inner surface (2a), an outer surface (2b), an internal diameter (2c) and an outer diameter (2d), with a cylindrical sealing cap (3), which has an outer diameter (3a) that corresponds to the outer diameter (2d) of the thermowell (2), an open end section and an interior area (3b), wherein the interior area (3b) has an internal diameter (3c), an inner wall area (3d) and an inner floor area (3e), with a sleeve (4) that can be deformed in the radial direction, and with a rod-shaped temperature-sensitive component (5), said method comprising at least the following steps:
- Insertion of the sleeve (4), which can be deformed in the radial direction, into the sealing cap (3);
- Sealing of the end section of the thermowell (2) by attaching the open end section of the sealing cap (3) to the end section of the thermowell (2) in such a way that the sealing cap (3) seals the end section of the thermowell (2);
- Introduction of the temperature-sensitive component (5) in the axial direction through the thermowell (2) in the direction of the inner floor area (3e) of the sealing cap (3), as a result of which the sleeve (4) undergoes radial deformation in such a way that causes a thermo-conductive connection of the sleeve (4) with the inner wall area (3d) of the sealing cap (3) and with the temperature-sensitive component (5).

14. Method as claimed in Claim 13, wherein the sealing cap (3) is attached on the thermowell (2) using a welding procedure, particularly hard soldering, lasering or Wolfram inert gas welding.
